# EUROPEAN PATENT APPLICATION

(11) **EP 3 117 966 A1**
(43) Date of publication of application: **18.01.2017**
(21) Application number: 15184648.2
(22) Date of filing: 10.09.2015
(51) Int. Cl.: B25J 9/00

(54) **HYBRID ROBOT**

(30) Priority: 13.07.2015 PL 41311015
(71) Applicant: Akademia Gorniczo-Hutnicza im. Stanislawa Staszica w Krakowie, 30-059 Krakow (PL)
(72) Inventor: KARPIEL, Grzegorz, 31-841 Kraków (PL); PETKO, Maciej, 31-131 Kraków (PL); KOBUS, Konrad, 24-100 Pulawy (PL); STANGEL-WÓJCIKIEWICZ, Klaudia, 32-087 Zielonki (PL)
(74) Representative: Kowal, Elzbieta

(57) **Abstract**

The hybrid robot with five degrees of freedom, comprising a base, links connected with joints and a gripper is characterized according to the invention in that it comprises two planar mechanisms (A and B), which are perpendicularly oriented in space, so that when the first planar mechanism (A) is in a horizontal plane then the second planar mechanism (B) is in a vertical plane and the first planar mechanism (A) comprises two prismatic joints, the first prismatic joint (1) and the second prismatic joint (2), running on guides, the first guide (I) and the second guide (II), and two revolute joints, the first revolute joint (a) and the second revolute joint (b) connected through the third guide (III), wherein the first revolute joint (a) is connected to the third guide (III) through the third prismatic joint (3), while the guides, the first guide (I) and second guide (II) form the base of the robot, whereas the second planar mechanism (B) enclose three prismatic joints (4, 5, 6) running on the third guide (III), wherein these prismatic joints (4, 5, 6) are connected through the link system (IV) connected by the revolute joints (c).

## Description

The object of the invention is a hybrid robot with five degrees of freedom, which is applied for assembly and handling works, also for medical treatments.

There are known robots or manipulators with several degrees of freedom.

The parallel manipulator with five degrees of freedom known from patent No. PL208563 includes a movable platform being the joint connecting three limbs. The limbs are driven by linear actuators mounted to the base through universal joint arranged in one plane.

More specifically, the three limbs of variable length are provided with linear actuators and withdrawable links, connected through joint - in a spatial configuration of truncated pyramid side edges - between the manipulator base and the holder base. The joints connecting the limbs to the manipulator base are the revolute joints with 2 degrees of freedom and the holder joints connecting the other ends of the limbs to the holder base are revolute joints with 1 degree of freedom. The holder joints are connected to the holder base through a common revolute joint, wherein axes of the holder joints lie in planes perpendicular to the axis of the common revolute joint. The essence of the solution consists in that the withdrawable links of the limbs are rotatable in the limb bodies, wherein in at least two limbs they are connected to rotation units by pass-through driving joints. In such solution linear actuators decide on the holder base position in relation to the manipulator base, while the rotation units of the withdrawable links decide on the orientation of the axis of that base. For orientation of a gripper it is sufficient when two limbs are provided with the rotation units of the withdrawable links. Using of the rotation units at all three limbs increases the operating parameters of the robot. The entire system forms a closed kinematic chain, characterized by high rigidity.

Another manipulator, described in the patent description of the international application WO 99 10 137, is provided with six linear actuators with axial longitudinal guides. Fixed members of the actuators are rigidly attached to the manipulator base, parallel to each other and in a circular configuration. Movable members of the actuators are connected through connectors to the holder base, wherein the connection is realized at both ends of each connector through revolute joints with two degrees of freedom, with two perpendicularly intersecting axes of rotation. The connectors are lengthwise bent and intersect with each other in pairs in a workspace between the fixed manipulator base and the moving holder base.

A known manipulator is also the Stewart manipulator having six limbs of variable length, connecting the manipulator base to the holder base through ball or universal joints. Controlled length of the individual limbs allows the orientation of the holder in the six degrees of freedom. The range of movements in individual degrees of freedom depends on the method of attachment of the limbs and the draw-out length of the limbs. In this solution the increase of the motion range in one degree of freedom causes simultaneous decrease of the motion range in another, and further, a change of the working length of each limb influences all other degrees of freedom, which greatly complicates the control system.

In some fields, the specific configuration of the robot or manipulator in combination with high operational precision is important. The surgery, especially surgery in gynaecology and urology belongs to these fields. Robots used during surgical treatments have to ensure very high precision and rigidity, and they must have the form and the range of motion adapted to the,specific needs of surgeons. In particular, there is a need for a device which will facilitate administration of stem cells into the urethra sphincter in women. This treatment is performed for women with stress incontinence problem. It is estimated that more than half of women over 60 years old and 60-70 percent of women after childbirth have this problem. One method of treatment is the precise administration of stem cells into the sphincter. Localization of the spot and its puncture is very difficult during carrying out surgery in a traditional way, and therefore there is a need to develop a robot that could carry out this process under supervision of the surgeon. Currently, there are no robots in the world, which would enable to carry out such treatment.

The hybrid robot with five degrees of freedom, comprising a base, links connected with joints and a gripper is characterized according to the invention in that it comprises two planar mechanisms, which are perpendicularly oriented in space, so that when the first planar mechanism is in a horizontal plane then the second planar mechanism is in a vertical plane, and the first planar mechanism includes two prismatic joints, the first and the second, moving on guides, the first guide and the second guide, and two revolute joints, the first and the second, connected through the third guide, the first revolute joint being connected to the third guide through the third prismatic joint, and the first and second guides are the basis of the robot, while the second planar mechanism encloses next three prismatic joints moving along the third guide, and said prismatic joints are connected by means of link system connected via revolute joints.

Preferably, the prismatic joints are actuated by the linear drive.

Preferably, the prismatic joints are actuated by the screw drive.

Preferably, the actuator is an electric motor, preferably the actuator is a DC motor or a stepper motor.

Preferably, the actuator is a pneumatic linear actuator.

The object of the invention is illustrated in the embodiments in the drawing, in which fig. 1 shows a diagram of the kinematic structure of the hybrid robot, fig. 2 shows a perspective view of the hybrid robot with a direct rotary drive and fig. 3 shows a perspective view of the hybrid robot with a linear drive.

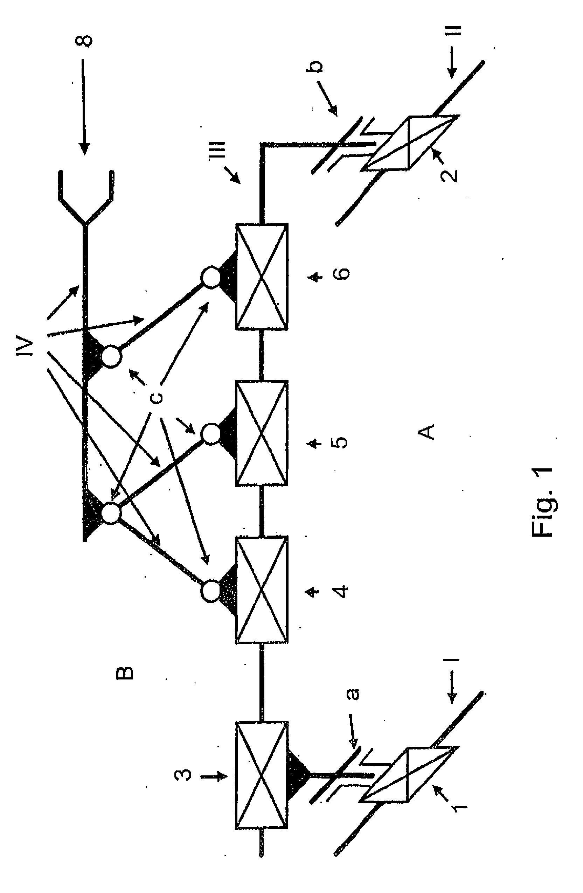

As shown in the diagram of figure 1, the hybrid robot of the invention comprises two planar mechanisms A and B. The planar mechanisms A and B are perpendicularly oriented in space, so that when the first planar mechanism A is in a horizontal plane then the second planar mechanism B is in a vertical plane.

The first planar mechanism A comprises two prismatic joints, the first prismatic joint 1 and the second prismatic joint 2, running on guides, the first guide I and the second guide II, respectively, and two revolute joints, the first revolute joint a and the second revolute joint b connected through the third guide III, wherein the first revolute joint a is connected to the third guide III through the third prismatic joint 3. The first guide I and the second guide II form the base of the robot.

The second planar mechanism B comprises three prismatic joints 4, 5, 6 moving along the third guide III. These joints are connected by means of the link system IV connected through the revolute joints c.

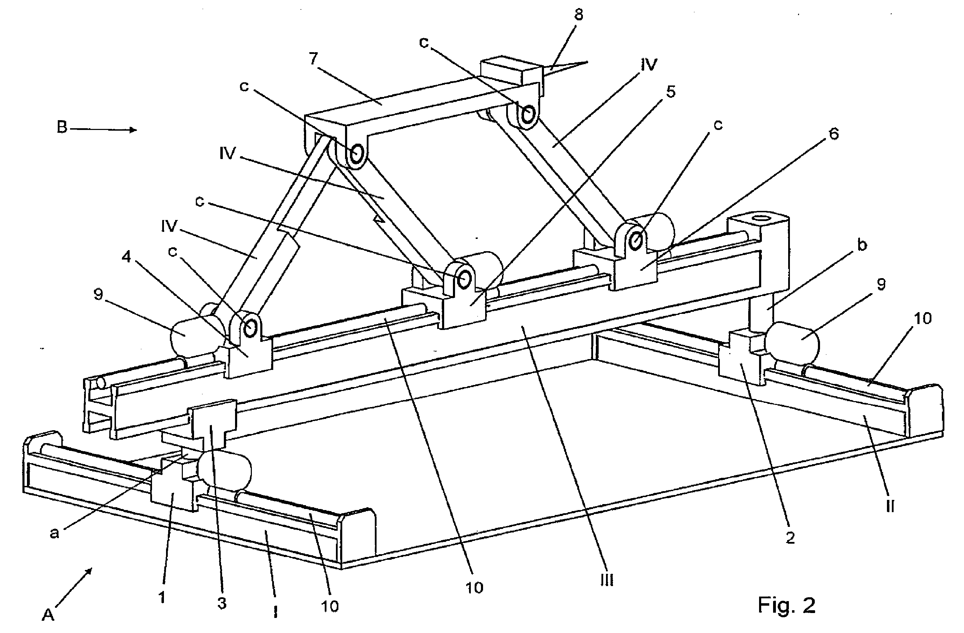

The hybrid robot shown in the figure 2 uses direct drives 9 attached directly to the prismatic joints 4, 5, 6, respectively. Drives 9 are provided on the screw 10. The screw 10 itself is immobilized. Consequently, the rotating drives 9 move together with the prismatic joints 4, 5, 5, which run on the third guide III.

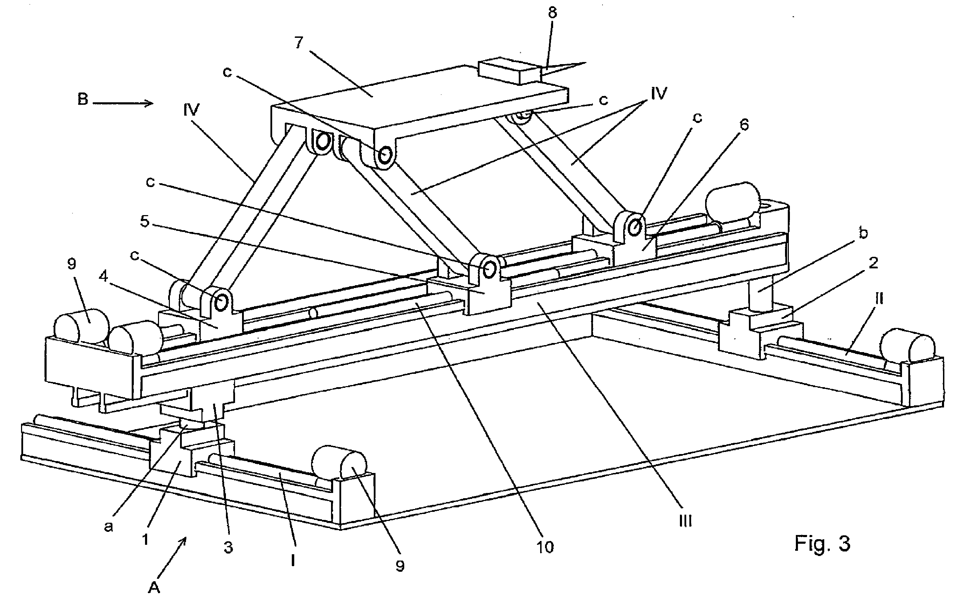

In an embodiment shown in figure 3, the drives 9 push prismatic joints 4, 5, 6 via the screw 10, except that in this example the drives 9 do not move together with the prismatic joints 4, 5, 6, as they are restrained.

With this configuration, the drives 9 can be electric motors (DC, stepper, etc.) with a screw or pneumatic linear actuators, etc.

In both embodiments shown in fig. 2 and fig. 3, the upper ends of the links IV are connected to the platform 7 on which a gripper 8 is mounted.

The hybrid robot according to the invention can be used for surgical treatments, particularly gynaecological and urological treatments. The use of the hybrid robot according to the invention for the operation of administration of stem cells into the urethra sphincter in women is particularly preferred. The robot controlled by a doctor can perform such an operation more precisely.

The hybrid robot according to the invention comprises two mechanisms. This is the first advantage, which greatly increases its work value in the small pelvis area. The "vertical" mechanism is a planar mechanism, whereby it easily fits between the legs of the patient. This mechanism is a parallel mechanism and thus it provides high rigidity and precision while being a lightweight system. In addition, the linear (prismatic) joints are arranged on one guide. Thus, easy withdrawal of the end-effector of the robot from the patient is achieved in case of emergency. The vertical mechanism has three degrees of freedom, allowing the movement of the end-effector in the vertical axis, in the axis from and towards the patient and the inclination of the end-effector. A particular advantage is a large movement from and towards the patient. In the proposed solution this range is the largest. Therefore, the hybrid robot can be used for any urological and gynaecological and other treatments in the small pelvis area in both women and men.

The "horizontal" mechanism complements the hybrid robot. It adds two degrees of freedom: horizontal movement and rotation. These movements are useful in the initial phase of the surgery, when a doctor orientates the end-effector of the robot in relation to the patient. This mechanism has yet another advantage. Its configuration allows for easy attachment of the hybrid robot to the operating table.

The combination of the "vertical" and "horizontal" mechanisms gives the physician the full freedom of the work with a very compact structure of the robot. This is another advantage of the proposed solution because according to the observations made by the inventors the space for the robot during medical treatments is very small. At the operating table there are many other devices and only dedicated structure in the form of a hybrid robot prevents collisions.

## Claims

1. A hybrid robot with five degrees of freedom, comprising a base, links connected with joints and a gripper **characterized in that** it comprises two planar mechanisms (A and B), which are perpendicularly oriented in space, so that when the first planar mechanism (A) is in a horizontal plane then the second planar mechanism (B)is in a vertical plane and the first planar mechanism (A) comprises two prismatic joints, the first prismatic joint (1) and the second prismatic joint (2), running on guides, the first guide (I) and the second guide (II), and two revolute joints, the first revolute joint (a) and the second revolute joint (b), connected through the third guide (III), the first revolute joint (a) being connected to the third guide (III) through the third prismatic joint (3), and the guides, the first guide (I) and second guide (II), form the base of the robot, while the second planar mechanism (B) encloses three prismatic joints (4, 5, 6) running on the third guide (III), and these prismatic joints (4, 5, 6) are connected through the system of links (IV) connected by the revolute joints (c).

2. The robot according to claim 1, **characterized in that** the prismatic joints (1, 2, 3, 4, 5, 6) are actuated by a linear drive.

3. The robot according to claim 1, **characterized in that** the prismatic joints (1, 2, 3, 4, 5, 6) are actuated by a screw drive.

4. The robot according to claim 1, **characterized in that** the actuator is an electric motor, preferably the actuator is a DC motor or a stepper motor.

5. The robot according to claim 1, **characterized in that** the actuator is a pneumatic linear actuator.
